# EUROPÄISCHE PATENTSCHRIFT

(11) **EP 1 702 792 B1**
(45) Veröffentlichungstag und Bekanntmachung des Hinweises auf die Patenterteilung: **25.05.2011**
(21) Anmeldenummer: 06002239.9
(22) Anmeldetag: 03.02.2006
(51) Int. Cl.: B60P 1/64, F15B 15/16

(54) **Hubgerät für Wechselbehälter auf einem Lastentransportfahrzeug**
Lifting device for a interchangeable container on a truck
Système de levage de benne amovible de camion

(30) Priorität: 14.03.2005 DE 102005011630
(43) Veröffentlichungstag der Anmeldung: 20.09.2006
(73) Patentinhaber: Franz Xaver Meiller Fahrzeug- und Maschinenfabrik-GmbH & Co KG, 80997 München (DE)
(72) Erfinder: Eicheldinger, Michael, Dipl.-Ing., 85716 Unterschleissheim (DE); Märkl, Günther, 85229 Niederroth (DE)
(74) Vertreter: Tiesmeyer, Johannes

(56) Entgegenhaltungen:
- EP-A1- 0 055 697
- WO-A-03/074323
- CH-A- 301 905
- US-A- 3 415 169
- US-A- 5 694 827

## Beschreibung

Die Erfindung betrifft ein Lastentransportfahrzeug, insbesondere Abrollkipperfahrzeug oder Absetzkipperfahrzeug mit einem Wechselbehälter und einem Hubgerät für den Wechselbehälter, wobei das Hubgerät wenigstens einen Schwenkarm zum Abladen des Wechselbehälters von dem Lastentransportfahrzeug bzw. zum Aufladen des Wechselbehälters auf das Lastentransportfahrzeug und wenigstens einen hydraulischen Zylinder als Schwenkantriebsmittel für den Schwenkarm beim Abladen und beim Aufladen eines Wechselbehälters aufweist.

Hydraulisch angetriebene Lastenbewegungsgeräte in Form von Schwenkarmen findet man beispielsweise bei sogenannten Abrollkipperfahrzeugen (vgl. z.B. DE 33 32 275 A1, DE 29 03 462 C2 und DE 196 37 891 A1). Solche Abrollkipperfahrzeuge üblicher Bauart weisen einen in Fahrzeuglängsmitte vorgesehenen schwenkbaren Lasthebearm auf, der um eine horizontale und quer zur Fahrzeuglängsrichtung verlaufende Schwenkachse zwischen einer ersten Schwenkstellung und einer zweiten Schwenkstellung schwenkbar ist und an seinem von der Schwenkachse entfernten Ende einen Hakenarm mit einem darin vorgesehenen Haken aufweist, der mit einer komplementären Öse eines Wechselbehälters in Eingriff zu bringen ist. In einer normalen Fahrtstellung stützt sich der Wechselbehälter auf dem Fahrzeugaufbau bzw. einem Basisrahmen ab, wobei der im Folgenden auch als Schwenkarm bezeichnete Lasthebearm im Wesentlichen horizontal liegt und sich der Hakenarm vom Lasthebearm vertikal nach oben zur Öse des Wechselbehälters erstreckt. Soll nun ein solcher Wechselbehälter vom Fahrzeug abgeladen werden, so ist dies dadurch zu erreichen, dass der Lasthebearm aus seiner ersten Schwenkstellung um seine Schwenkachse herum und über eine näherungsweise aufrechte Totpunktlage hinweg in eine zweite Schwenkstellung verschwenkt wird. Bei einem solchen Schwenkvorgang kann der Wechselbehälter an Rollen, die sich am Fahrzeugheck befinden, abrollen und sich dabei nach und nach weiter vom Fahrzeugaufbau entfernen, bis der Wechselbehälter vollständig auf dem Boden hinter dem Fahrzeugheck abgesetzt worden ist. Als Schwenkantriebsmittel für den Schwenkarm sind bei Abrollkipperfahrzeugen normalerweise zwei doppelt wirkende hydraulische Zylinder vorgesehen. Die hydraulischen Zylinder sind mit ihren entgegengesetzten Enden einerseits an einem rahmenfesten Aufbau des Fahrzeugs - und andererseits am Schwenkarm angelenkt, wobei sie im Wesentlichen parallel zueinander angeordnet und mechanisch zum Gleichlauf gekoppelt sind. Das Verschwenken des Schwenkarmes erfolgt durch Ausfahren bzw. Einziehen der Kolbenstangen der hydraulischen Zylinder, wobei hierzu die doppelt wirkenden Zylinder mit Hydraulikfluid von einer Hydraulikpumpe beaufschlagt werden. Die hydraulische Pumpe ist über ein hydraulisches Leitungssystem mit daran befindlichen Lasthalteventilen usw. mit den Zylindern verbunden. Rücklaufleitungen mit darin befindlichen Halteventilen dienen dazu, aus den Zylindern verdrängtes Hydraulikfluid in einen Tank zurückzuführen.

Aus der DE 100 63 610 A1 ist es bekannt, dass schwenkbare Lasthebearme (Schwenkarme) bei Absetzkipperfahrzeugen und bei Abrollkipperfahrzeugen in einer Eilgang-Betriebsart betrieben werden können. In der üblicherweise nur über einen begrenzten Schwenkwinkelbereich zu wählenden Eilgang-Betriebsart kann die Lasthebearmanordnung mit größerer Geschwindigkeit verschwenkt werden, als dies in einer Normalbetriebsart der Fall ist.

Bei Abrollkipperfahrzeugen sind die hydraulischen Zylinder mit eingezogenen Kolbenstangen normalerweise nahezu horizontal ausgerichtet, wenn sich der Schwenkarm in seiner normalen Fahrtstellung - und somit ebenfalls in einer nahezu horizontalen Ausrichtung auf dem Fahrzeugaufbau befindet. Werden die hydraulischen Zylinder ausgehend von ihrer Stellung eingezogener Kolbenstangen nun durch Beaufschlagung mit Druckfluid aktiviert, um die Kolbenstangen auszufahren und somit den Schwenkarm zu verschwenken, so ist der orthogonal zur Kraftwirkungslinie der jeweiligen Kolbenstange und orthogonal zu der Schwenkachse des Schwenkarmes zu messende Abstand zwischen Kolbenstange und Schwenkachse und somit der Hebelarm zum Verschwenken des Schwenkarmes zunächst sehr klein. Mit anderen Worten heißt dies, dass zu Beginn der Schwenkbewegung die Hebelverhältnisse zwischen den hydraulischen Zylindern und dem Schwenkarm sehr ungünstig sind und die hydraulischen Zylinder daher eine zunächst große Kraft aufzubringen haben, um den Schwenkarm aus seiner im Wesentlichen horizontalen Fahrtstellung heraus zu verschwenken. Nach dem anfänglichen Herausbewegen des Schwenkarmes aus seiner normalen Fahrtstellung werden die Hebelverhältnisse zwischen den hydraulischen Zylindern und dem Schwenkarm günstiger, d.h. der Hebelarm wird zunächst größer, so dass bei gleichem Drehmoment die von den hydraulischen Zylindern aufzubringenden Kräfte geringer werden können. Nach Überschreiten einer bestimmten Schwenkstellung, z.B. der Totpunktstellung des Schwenkarms, können die Hebelverhältnisse wieder ungünstiger werden. Üblicherweise ist jedoch der wirksame Hebelarm in allen weiteren Schwenkstellungen des Schwenkarmes größer als in der horizontalen Ausgangsstellung mit eingezogenen Kolbenstangen. Die hydraulischen Zylinder sind daher so zu dimensionieren, dass sie die großen Kräfte zu Beginn der Schwenkbewegung des Schwenkarmes aus der normalen Fahrtstellung bei spezifizierter Maximallast auf dem Schwenkarm aufbringen können.

Auch bei den üblichen Absetzkipperfahrzeugen ändern sich die Hebelverhältnisse beim Verschwenken der für die Handhabung von Wechselbehältern vorgesehenen Schwenkarme des betreffenden Hubgerätes aufgrund des sich ändernden Winkels zwischen der Kraftwirkungslinie des betreffenden hydraulischen Zylinders und des davon zur Schwenkbewegung angetriebenen Schwenkarmes beim Ausfahren der Kolbenstange. Auch bei solchen Absetzkipperfahrzeugen ist die von den hydraulischen Antriebszylindern der Schwenkarme aufzubringende Kraft normalerweise am größten zu Beginn der Schwenkbewegung aus der normalen Fahrtstellung der Schwenkarme heraus. Auch die für den Schwenkbetrieb von Absetzkippern verwendeten hydraulischen Zylinder sind daher so dimensioniert, dass sie die geforderten Kräfte bei den ungünstigen Hebelverhältnissen zu Beginn der Schwenkbewegung der Schwenkarme aus der Normalstellung heraus aufbringen können.

Sowohl bei Absetzkipperfahrzeugen als auch bei Abrollkipperfahrzeugen sind üblicherweise zwei mechanisch oder hydraulisch zum Gleichlauf gekoppelte hydraulische Zylinder vorgesehen, welche einerseits an dem Schwenkarm und andererseits am Fahrzeugrahmen angelenkt sind.

In der gattungsgemäßen Druckschrift WO 03/074323 A1 wird ein Abrollkipperfahrzeug mit Wechselbehälter und einem Hubgerät mit den Merkmalen des Oberbegriffs von Anspruch 1 offenbart, bei dem die ungünstigen Hebelverhältnisse am Anfang der Schwenkbewegung aus der Normalstellung heraus durch den Einsatz von zwei zusätzlichen teleskopischen Hilfszylindern überwunden werden, die derart drehbar am Chassis des Hubgerüsts angebracht sind, dass ihre Zylinderlängsachsen in der Normalstellung nahezu vertikal verlaufen, und die die Schwenkbewegung an deren Anfang aus der Normalstellung heraus unterstützen.

Der Aufbau eines konventionellen Teleskopzylinders, wie er als Kipperpresse, z.B. bei Großmuldenkipperfahrzeugen Verwendung findet, ist z.B. in der US 5 694 827 erläutert.

Der Erfindung liegt die Aufgabe zugrunde, bei einem Lastentransportfahrzeug der eingangs genannten Art ein verbessertes Schwenkantriebskonzept für das Hubgerät mit einfachen Mitteln auf möglichst Platz sparende Weise zu realisieren, so dass das Hubgerät in seiner Komplexität vereinfacht und der Raumbedarf der hydraulischen Zylinder verkleinert ist.

Zur Lösung dieser Aufgabe wird erfindungsgemäß vorgeschlagen, dass bei einem solchen Lastentransportfahrzeug mit Wechselbehälter und Hubgerät für den Wechselbehälter der hydraulische Zylinder des Hubgerätes ein Teleskopzylinder ist, dessen Antriebskraft bei gegebener hydraulischer Druckbeaufschlagung der Teleskopzylinderstufen abhängig vom jeweiligen Ausfahrzustand der Teleskopzylinderstufen und somit von der jeweiligen Schwenkstellung des Schwenkarmes variiert.

Dabei umfasst der Teleskopzylinder einen Basiszylinderkörper, einen.darin längs einer ersten Hubstrecke axial verschiebbar geführten und eine Hohlkolbenstange aufweisenden Kolben erster Stufe und einen in der Hohlkolbenstange längs einer zweiten Hubstrecke axial verschiebbar geführten und eine Kolbenstange aufweisenden Kolben zweiter Stufe, wobei ausgehend von einer Stellung eingezogener Kolbenstangen die beiden Kolben unter Bildung einer gemeinsamen wirksamen Kolbenbeaufschlagungsfläche simultan mit Druck eines dem Basiszylinderkörper zuzuführenden Druckfluids beaufschlagbar sind, bis der Kolben erster Stufe in eine Anschlagstellung am Ende der ersten Hubstrecke angekommen ist, wonach der Kolben zweiter Stufe an seiner im Vergleich mit der gemeinsamen wirksamen Kolbenbeaufschlagungsfläche kleineren eigenen Kolbenbeaufschlagungsfläche weiterhin mit dem Druck des Druckfluids beaufschlagbar ist, um ihn längs der zweiten Hubstrecke zu bewegen und seine Kolbenstange auszufahren. Dabei ist die erste Hubstrecke kürzer als die zweite Hubstrecke.

Das erfindungsgemäße Antriebskonzept für den Schwenkarm sieht vor, dass der Teleskopzylinder bei gegebener hydraulischer Druckbeaufschlagung über einen vorzugsweise kleinen und mit einer geometrisch ungünstigen Hebelwirkung zwischen dem hydraulischen Zylinder und dem Schwenkarm korrespondierenden Schwenkbereich des Schwenkarmes eine größere Kraft aufzubringen vermag als in einem vorzugsweise großen Schwenkbereich mit günstigeren Hebelverhältnissen zwischen Antriebszylinder und Schwenkarm. Ein solcher Teleskopzylinder kann im Vergleich mit den Antriebszylindern für Schwenkarme nach dem Stand der Technik dimensionsmäßig abgestuft und insgesamt kleiner realisiert werden. Ferner bietet das erfindungsgemäße Schwenkantriebskonzept den Vorteil, dass der Teleskopzylinder so zu betreiben ist, dass sich bei gegebener hydraulischer Druckbeaufschlagung der Teleskopzylinderstufen abhängig vom jeweiligen Ausfahrzustand der Teleskopzylinderstufen und somit von der jeweiligen Schwenkstellung des Schwenkarmes unterschiedliche Schwenkantriebsgeschwindigkeiten ergeben. Dies kann durch entsprechende Dimensionierung des Teleskopzylinders realisiert werden, sodass der Schwenkantrieb eine inhärente Eilgang-Funktion aufweist. Während der Phasen erhöhten Kraftbedarfs beim Verschwenken des Schwenkarmes stellt sich dann normalerweise eine geringere Schwenkantriebsgeschwindigkeit ein als in den Phasen geringeren Kraftbedarfs. Diese Eilgang-Funktion kann durch Steuerung der hydraulischen Druckbeaufschlagung des Zylinders ggf. moduliert oder ggf. unterdrückt werden.

Die erste Hubstrecke des Teleskopzylinders korrespondiert mit dem Schwenkbereich erhöhten Kraftbedarfs. Da dieser Schwenkbereich relativ klein sein sollte, kann die erste Hubstrecke vergleichsweise kurz gehalten sein. Dies bedeutet, dass der Basiszylinderkörper mit einer geringen Zylinderlänge ausgeführt werden kann, was hinsichtlich der Frage der Platzoptimierung und der Gewichtsoptimierung bedeutsam ist, da der Basiszylinderkörper normalerweise den Bereich maximalen Durchmessers des Antriebszylinders definiert. Dies bedeutet mit anderen Worten, dass sich der Bereich maximalen Durchmessers des Zylinders nur über einen vergleichsweise kleinen Bereich seiner gesamten Länge erstreckt. Der in dem Basiszylinder geführte Hohlkolben und dessen Hohlkolbenstange haben gemeinsam vorzugsweise eine erheblich größere Länge als der Basiszylinderkörper. Dies bedeutet, dass auch bei vollständig eingezogenem Kolben erster Stufe dessen Hohlkolbenstange mit einem Großteil ihrer Länge aus dem Basiszylinderkörper herausragt. Entsprechend der größeren Länge dieser Hohlkolbenstange ist auch die für den darin verschiebbaren Kolben zweiter Stufe verfügbare zweite Hubstrecke in bevorzugter Ausgestaltung der Erfindung erheblich größer als die erste Hubstrecke des Kolbens erster Stufe.

Ausgehend von der Stellung eingezogener Kolbenstangen können beide Kolben an einer gemeinsamen Seite mit Druckfluid beaufschlagt werden, so dass sie unter Bildung der gemeinsamen wirksamen Kolbenbeaufschlagungsfläche zunächst beide ausgefahren werden, bis der Kolben erster Stufe an eine Anschlagstufe des Basiszylinderkörpers anschlägt und somit das Ende der ersten Hubstrecke erreicht hat. Der Kolben zweiter Stufe kann dann alleine die Ausschubbewegung fortsetzen, und zwar innerhalb der Hohlkolbenstange des Kolbens erster Stufe. Die Ausschubbewegung des Kolbens zweiter Stufe wird dann aber nicht mehr von dem Kolben erster Stufe unterstützt, so dass die von dem Zylinder nunmehr bereitgestellte Antriebskraft normalerweise geringer ist. Bei unveränderter hydraulischer Druckbeaufschlagung bzw. Ölmengenzufuhr wird der Kolben zweiter Stufe seine Kolbenstange dann schneller ausschieben. Die Pumpleistung der Hydraulikfluidzuführung muss daher nicht gesteigert werden, um die Schwenkbewegung im mittleren Schwenkbereich schneller ablaufen zu lassen.

Vorzugsweise ist der Teleskopzylinder ein doppelt wirkender Zylinder.

Bei dem vorstehend angesprochenen Teleskopzylinder erfolgt die Phase erhöhter Antriebskraft unmittelbar aus der Stellung maximal eingezogener Kolbenstangen heraus und somit zu beginn des Ausschubvorgangs der Teleskopzylinderstufen. Gemäß einer Variante der Erfindung ist der Teleskopzylinder so gestaltet, dass die Phase erhöhter Antriebskraft auch beim Einziehen der Kolbenstangen auftritt, und zwar zu Beginn der Rückschwenkbewegung des Schwenkarmes aus seiner maximal ausgelenkten Stellung heraus.

Es hat sich als besonders zweckmäßig herausgestellt, dass die gemeinsame wirksame Kolbenbeaufschlagungsfläche der beiden Kolben größer ist als das 1.2-Fache der Kolbenbeaufschlagungsfläche des Kolbens zweiter Stufe.

Es sei darauf hingewiesen, dass im Rahmen der Erfindung die vorstehend erläuterte Zweistufen-Lösung auf eine Lösung mit drei oder mehreren Stufen erweitert werden kann.

Insbesondere bei einem Hubgerät für ein Abrollkipperfahrzeug und bei einem Hubgerät für ein Absetzkipperfahrzeug sollten wenigstens zwei Schwenkantriebszylinder vorgesehen werden, von denen wenigstens einer ein Teleskopzylinder der.vorstehend angesprochenen Art ist. Vorzugsweise sollten zwei gleichartige Teleskopzylinder verwendet werden.

Die Erfindung wird im Folgenden unter Bezugnahme auf die Figuren näher erläutert.
- Fig. 1a: zeigt in stark vereinfachter Darstellung die Seitenansicht eines kon- ventionellen Abrollkipperfahrzeuges mit in der normalen Fahrtstellung aufgenommenem Wechselbehälter.
- Fig. 1b: zeigt eine Skizze zur Erläuterung der Hebelverhältnisse zwischen einem hydraulischen Antriebszylinder und einem Schwenkarm des Hubgerätes auf dem Abrollkipperfahrzeug zu Beginn des Schwenkvorgangs des Schwenkarmes ausgehend von der Stellung gemäß Fig. 1a.
- Fig. 1c: zeigt das Hubgerät des Abrollkippers in der normalen Fahrtstellung gemäß Fig. 1a in einer perspektivischen und im Vergleich mit Fig. 1a detaillierteren Darstellung.
- Fig. 2a: zeigt das Abrollkipperfahrzeug in einer der Fig. 1a ähnlichen Ansicht in einer Momentaufnahme beim Abladen des Wechselbehälters, wobei der Schwenkarm aus seiner normalen Fahrtstellung heraus verschwenkt worden ist.
- Fig. 2b: zeigt eine Skizze zur Erläuterung der Hebelverhältnisse zwischen dem Antriebszylinder und dem Schwenkarm in dem Zustand gemäß Fig. 2a.
- Fig. 3a: zeigt das Abrollkipperfahrzeug mit weit nach hinten verschwenktem Schwenkarm und hinter dem Fahrzeug abgesetztem Wechselbehälter, wobei der Schwenkantriebszylinder an dem Schwenkarm zieht, um den Wechselbehälter wieder aufzuladen.
- Fig. 3b: zeigt eine Skizze zur Erläuterung der Hebelverhältnisse zwischen dem Antriebszylinder und dem Schwenkarm in dem Zustand gemäß Fig. 3a.
- Fig. 3c: zeigt in einer perspektivischen Darstellung das Hubgerät des Abrollkipperfahrzeugs in dem Zustand gemäß Fig. 3a.
- Fig. 4a: zeigt das Abrollkipperfahrzeug in einem Kippbetriebszustand in Seitenansicht.
- Fig. 4b: zeigt das Hubgerät aus Fig. 4a in einer perspektivischen und detaillierten Darstellung.
- Fig. 5: zeigt in einer perspektivischen Darstellung ein Hubgerät nach der Erfindung mit einem verbesserten Schwenkantriebskonzept.
- Fig. 6: zeigt in einer Längsschnittdarstellung einen Teleskopzylinder für das Hubgerät gemäß Fig. 5.
- Fig. 7: zeigt eine Variante des Teleskopzylinders aus Fig. 6 in einer Längsschnittdarstellung.

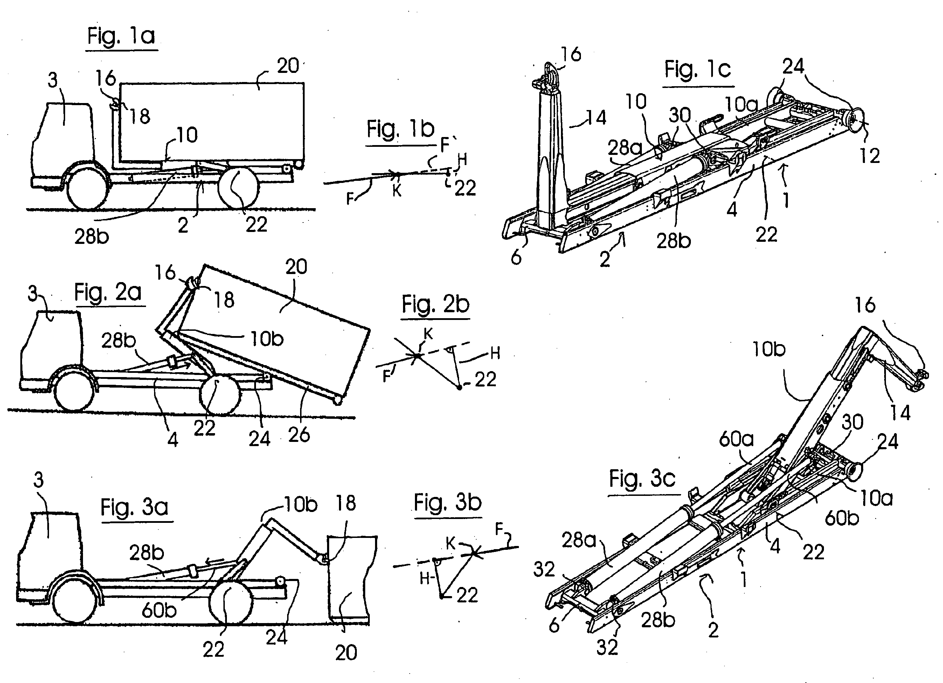

Das in den Figuren 1c, 3c und 4b gezeigte Hubgerät 2 umfasst einen Basisrahmen 1 aus Längsträgern 4 und Querstreben 6. Der zwischen den Längsträgern 4 vorgesehene Schwenkarm 10 erstreckt sich in der in Fig. 1c gezeigten Grundstellung (normale Fahrtstellung) von der quer zur Fahrzeuglängsrichtung liegenden heckseitigen Kippachse 12 nach vorne und weist an seinem von der Kippachse 12 entfernten Ende einen orthogonal nach oben abgewinkelten Hakenarm 14 mit einem Haken 16 zur Ineingriffnahme einer komplementären Öse 18 eines Behälters 20 (vgl. Fig. 1a) auf. Der Schwenkarm 10 weist einen kippachsennahen Schwenkarmabschnitt 10a und einen an dessen von der Kippachse 12 entferntem Ende um eine zur Kippachse 12 parallele Knickachse 22 schwenkbar gelagerten zweiten Schwenkarmabschnitt 10b auf.

Aus den Figuren 1a - 3c ist zu ersehen, dass ein auf dem Basisrahmen 1 des Hubgerätes 2 auf dem Fahrzeug 3 aufgenommener Behälter 20 durch Verschwenken des zweiten Schwenkarmabschnittes 10b um die Knickachse 22 vom Fahrzeug abgesetzt werden kann. Dabei gelangt der zweite Schwenkarmabschnitt 10b von der in Fig. 1a und Fig. 1c gezeigten Grundstellung in die in Fig. 3a und Fig. 3c gezeigte Auslegerstellung. Der Behälter rollt beim Absetzen an den Rollen 24 des Hubgerätes 2 mit seinen Behälterkufen 26 ab.

Zur Aufnahme eines hinter dem Heck eines Fahrzeugs 3 stehenden Behälters 20 können die anhand der Figuren 1a, 2a und 3a gezeigten Bewegungsabläufe umgekehrt werden.

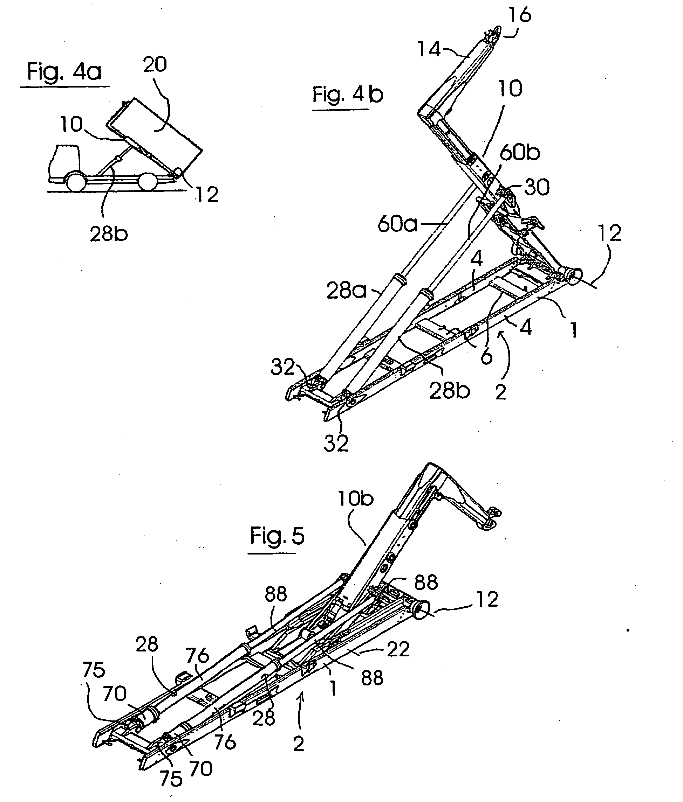

In einer Kippbetriebsart gemäß den Figuren 4a und 4b sind die beiden Schwenkarmabschnitte 10a und 10b starr miteinander verriegelt, so dass die zum Absetzen und Aufnehmen eines Behälters 20 genutzte Knickoption des Schwenkarms 10 unterdrückt ist. Der Behälter 20 kann somit am Fahrzeug 3 in eine Kippstellung gemäß Fig. 4a gebracht werden.

Ungeachtet dessen, ob der Schwenkarm 10 in der in den Figuren 1a, 2a und 3a gezeigten Weise oder in der in Fig. 4a gezeigten Weise bewegt wird, dienen als Antriebsmittel zwei hydraulische Zylinder 28a, 28b, die mit ihren Kolbenstangenenden 30 an dem zweiten Schwenkarmabschnitt 10b angelenkt sind. Die beiden hydraulischen Zylinder 28a, 28b erstrecken sich im Beispielsfall parallel zwischen den Längsträgern 4 des Basisrahmens 1 und sind mit ihren Zylindergehäuseenden 32 an dem Basisrahmen 1 angelenkt. Die Zylinder 28a und 28b in den Figuren 1a - 4b sind gleicher und konventioneller Bauart. Sie sind über den Basisrahmen 1 und den zweiten Schwenkarmabschnitt 10b mechanisch zum Gleichlauf gekoppelt.

In der in den Figuren 1a und 1c gezeigten Grundstellung oder normalen Fahrtstellung liegt der Schwenkarm 10 im Wesentlichen horizontal auf dem Grundrahmen 1, wobei die parallel zueinander liegenden hydraulischen Zylinder 28a und 28b so ausgerichtet sind, dass ihre Längsachsen unter einem relativ kleinen Anstellwinkel relativ zur Horizontalen verlaufen. Die geometrischen Kraftangriffsverhältnisse zwischen den Schwenkantriebszylindern 28a, 28b und dem Schwenkarm 10 sind in Fig. 1b skizziert. F bezeichnet die Richtung der von den Zylindern 28a, 28b beim Ausfahren der Kolbenstangen ausgehend von der in den Figuren 1a und 1c gezeigten Ausgangsstellung ausgeübten Kraft. Mit 22 ist in Fig. 1b die Knickachse des Schwenkarms 10 und somit die Drehachse für den zweiten Schwenkarmabschnitt 10b bezeichnet. K bezeichnet den Kraftangriffspunkt der Zylinder 28a, 28b an dem zweiten Schwenkarmabschnitt 10b. Dieser Kraftangriffspunkt K entspricht der Stelle der Anlenkung der Kolbenstangen 60a, 60b der hydraulischen Zylinder 28a, 28b am zweiten Schwenkarmabschnitt 10b. Mit H ist der wirksame Hebelarm für die Kraft F beim Verschwenken des Schwenkarmabschnittes 10b aus der Grundstellung gemäß den Figuren 1a und 1c heraus bezeichnet. Es handelt sich bei H um den senkrecht auf der Kraftwirkungslinie F' stehenden Abstand zwischen der Kraftwirkungslinie F' und dem Drehpunkt 22 in Fig. 1b.

Aufgrund des sehr kleinen Hebelarms H liegen zunächst sehr ungünstige Hebelverhältnisse vor, so dass von den Zylindern 28a und 28b eine relativ große Kraft aufgebracht werden muss, um das zum Verschwenken des zweiten Schwenkarmabschnittes 10b erforderliche Drehmoment aufzubringen. Die Zylinder 28a und 28b sind dementsprechend so dimensioniert, dass sie unter Berücksichtigung einer spezifizierten Maximallast auf dem Schwenkarm 10 die extrem großen Kräfte bei Einleitung des Schwenkvorganges gemäß Fig. 1a - 1c sicher aufbringen können. Die Figuren 1c und 3c vermitteln einen Eindruck darüber, dass die hydraulischen Schwenkantriebszylinder 28a und 28b der konventionellen Bauart relativ groß ausgebildet sind. Sie nehmen damit auch an einer entsprechend großen Gewichtsbelastung des Fahrzeugs teil und benötigen zu ihrem hydraulischen Betrieb eine relativ große Menge an Druckfluid.

In Fig. 2a ist der Schwenkvorgang bereits so weit fortgeschritten, dass der zweite Schwenkarmabschnitt 10b einen Winkel von fast 45° mit der Horizontalen einschließt. Die Kraftangriffs- und Hebelverhältnisse sind in einer solchen Situation erheblich günstiger als in der Ausgangsstellung gemäß Fig. 1a. Aus der Skizze gemäß Fig. 2b ist zu ersehen, dass der wirksame Hebelarm H für die Kraft F in der Situation gemäß Fig. 2a erheblich größer ist als in der Ausgangssituation gemäß Fig. 1a-Fig. 1c. Zur Bereitstellung eines hinreichenden Drehmomentes (Produkt aus Kraft F und Hebelarm H) müssen die Zylinder 28a und 28b somit eine erheblich kleinere Kraft aufbringen als in der Situation gemäß Fig. 1a - Fig. 1c.

Fig. 3a zeigt das Abrollkipperfahrzeug mit abgeladenem Behälter 20 (letzterer ist in Fig. 3a nur teilweise dargestellt), wobei angenommen werden soll, dass die Zylinder 28a und 28b nun hydraulisch so angesteuert sind, dass sie ihre Kolbenstangen 60a, 60b einziehen, um den zweiten Schwenkarmabschnitt 10b wieder in die Ausgangslage gemäß Fig. 1a zu verschwenken und dabei den Wechselbehälter 20 wieder auf das Fahrzeug 3 aufzuladen. Aus Fig. 3b ist unmittelbar zu ersehen, dass die Kraftangriffs- und Hebelverhältnisse für diesen Schwenkvorgang ausgehend von der Situation gemäß Fig. 3a günstig sind, da der wirksame Hebelarm H für die Kraft F vergleichsweise groß ist.

Auch bei Einleitung eines Kippvorgangs zum Kippen eines Wechselbehälters 20 gemäß den Figuren 4a und 4b aus einer Grundstellung entsprechend den Figuren 1a - 1c heraus sind die Kraftangriffs- und Hebelverhältnisse zunächst sehr ungünstig, da der in Bezug auf die Kippachse 12 wirksame Hebelarm zunächst ebenfalls sehr klein ist und die Erzeugung eines hinreichend großen Drehmomentes für den Kippvorgang eine sehr große von den hydraulischen Zylindern 28a, 28b aufzubringende Kraft erfordert.

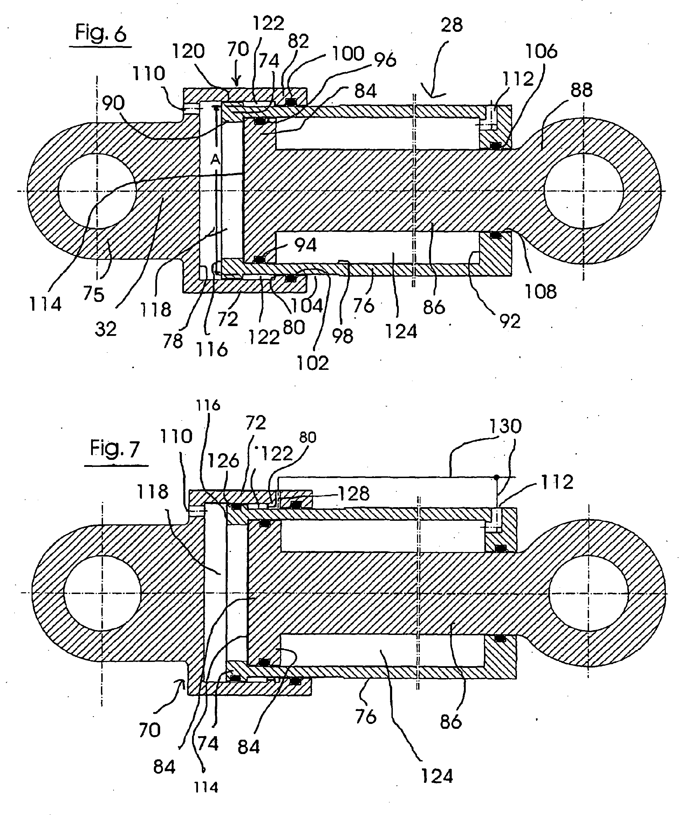

In den Figuren 1c, 3c und 4b ist das Hubgerät 2 mit konventionellen Schwenkantriebszylindern 28a und 28b gezeigt. In Fig. 5 ist ein Hubgerät mit verbessertem Antriebskonzept nach der Erfindung dargestellt. Im Beispielsfall hat das erfindungsgemäße Hubgerät gemäß Fig. 5 einen ähnlichen Aufbau wie das vorstehend unter Bezugnahme auf die Figuren 1a bis 4b erläuterte Hubgerät. Strukturell gleiche Elemente des konventionellen Hubgeräts und des erfindungsgemäßen Hubgerätes sind mit gleichen Bezugszeichen gekennzeichnet, so dass zur Erläuterung des erfindungsgemäßen Hubgerätes in Fig. 5 insoweit auf die obige Beschreibung verwiesen werden kann. Die Zylinder 28 in Fig. 5 sind zweistufige Teleskopzylinder, deren Aufbau im Folgenden unter Bezugnahme auf Fig. 6 näher erläutert wird.

Fig. 6 zeigt einen der der erfindungsgemäß ausgestalteten Teleskopzylinder 28 in einer Längsschnittdarstellung. Er weist einen Basiszylinderkörper 70 mit einem axial relativ kurzen Zylindergehäuse 72 auf, welches an seinem Ende 32 ein Befestigungsauge 75 zur gelenkigen Lagerung an dem Basisrahmen 1 (vgl. Fig. 5) hat. In dem Basiszylinderkörper 70 ist ein Hohlkolben 74 axial verschiebbar geführt. Der. Hohlkolben 74 weist eine Hohlkolbenstange 76 auf, die sich aus dem Basiszylinderkörper 70 axial nach außen erstreckt. Der Basiszylinderkörper 70 und der Hohlkolben 74 bilden eine erste Teleskopstufe. Die Hubstrecke (erste Hubstrecke) dieser ersten Teleskopstufe ist in Ausschubrichtung durch eine radial nach innen gerichtete Ringschulter 80 an dem vom Zylinderboden 78 entfernten axialen Ende 82 des Basiszylinderkörpers 70 begrenzt.

In der Hohlkolbenstange 76 des Kolbens 74 erster Stufe ist ein Kolben 84 axial verschiebbar geführt, welcher eine Endkolbenstange 86 aufweist, die mit ihrem vom Kolben 84 entfernten axialen Ende aus der Hohlkolbenstange 76 austritt und ein Befestigungsauge 88 aufweist. Das Befestigungsauge 88 dient der Anlenkung des Zylinders 28 an dem Schwenkarmabschnitt 10b (vgl. Fig. 5). Alternativ kann der Zylinder 28 auch in umgekehrter Lage zwischen dem Rahmen 1 und dem Schwenkarmabschnitt 10b eingebaut sein.

Der Kolben 84 bildet zusammen mit der Hohlkolbenstange 76 eine zweite Teleskopstufe. Der Hubweg des Kolbens 84 ist begrenzt durch eine radial nach innen gerichtete Ringschulter 90 des Kolbens 74 erster Stufe und durch die axiale Abschlusswand 92 der Hohlkolbenstange 76.

Mit 94 ist in Fig. 6 eine Hydraulikdichtung gekennzeichnet, welche zwischen der Außenumfangsfläche 96 des Kolbens 84 und der Innenumfangsfläche 98 der Hohlkolbenstange 76 wirkt.

Die hydraulische Dichtung 100 wirkt zwischen der Innenumfangsfläche der Ringschulter 82 und der Außenumfangsfläche 104 der Hohlkolbenstange 76.

Eine weitere Hydraulikdichtung 106 ist zwischen dem Außenumfang der Kolbenstange 86 und der Fläche der Durchtrittsöffnung 108 wirksam.

Anschlüsse für die Zuleitung und Ableitung von Hydrauliköl als Betriebsmedium sind bei 110 und 112 vorgesehen, wobei diese Anschlüsse 110, 112 an den axialen Stimseiten 78 bzw. 92 in den Zylinder 28 einmünden.

In Fig. 6 ist der Zylinder 28 in dem Zustand nahezu vollständig eingezogener Kolbenstangen gezeigt, was in etwa mit einer Schwenkstellung des Schwenkarmabschnitts 10b korrespondiert, wie sie in Fig. 1a - 1c dargestellt ist.

Soll nun der Zylinder 28 aktiviert werden, um die Kolbenstangen 76, 86 auszufahren, um bei dem Hubgerät nach der Erfindung die in Fig. 5 gezeigte Schwenkstellung des Schwenkarmabschnitts 10b herbeizuführen, so ist dem Zylinder 28 über den Anschluss 110 Hydrauliköl zuzuführen, so dass die beiden Kolben 74 und 84 an ihren in Fig. 6 links liegenden Kolbenflächen 114, 116 mit Druck beaufschlagt werden. Mit A ist der Bereich der dabei zunächst wirksamen gemeinsamen Kolbenbeaufschlagungsfläche angedeutet. Der Hydraulikdruck führt zu einem gemeinsamen Ausfahren der Kolbenstangen 76 und 86 aus dem Basiszylinderkörper 70, wobei die dabei erzeugte Ausschubkraft bei gegebener hydraulischer Druckbeaufschlagung in dem Zylinderkammerbereich 118 aufgrund der relativ großen wirksamen Kolbenbeaufschlagungsfläche zunächst groß ist, bis der Kolben 74 erster Stufe mit seiner radial über die Kolbenstange 76 nach außen abstehenden Ringschulter 120 an der Schulter 80 des Basiszylinderkörpers 70 anschlägt. Dieser erste Hubbereich erhöhter Ausschubkraft dient dazu, den Schwenkarmabschnitt 10b unter den zunächst ungünstigen Hebelverhältnissen aus der Grundstellung heraus zu verschwenken.

Bei weiterer Druckbeaufschlagung der Zylinderkammer 118 des Zylinders 28 in Fig. 6 verschiebt der Kolben 84 zweiter Stufe seine Kolbenstange 86 weiter nach außen, wobei dies bei gleich bleibendem Hydraulikölzufluss zu dem Zylinderkammerbereich 118 dann mit größerer Geschwindigkeit erfolgt als der anfängliche Hub der ersten Teleskopstufe. Zwar ist die Ausschubkraft der Kolbenstange 86 nicht mehr so groß wie zu Beginn der gemeinamen Ausschubbewegung beider Teleskopstufen. Dies ist jedoch hinnehmbar, da sich die Kraftangriffs- und Hebelverhältnisse beim Verschwenken des Schwenkarmabschnittes 10b in der oben unter Bezugnahme auf die Figuren 1b, 2b und 3b erläuterten Weise verbessert haben.

Es sei noch darauf hingewiesen, dass der in Fig. 6 von den Schultern 80 und 120 axial begrenzte Raum 122 nicht zu dem Zylinderkammerraum 118 hin abgedichtet ist, so dass Ölaustausch zwischen den Raumbereichen 118 und 122 möglich ist. Das beim Ausschieben der Kolbenstange 86 aus dem Raumbereich 124 der Hohlkolbenstange 76 verdrängte Hydrauliköl wird über den Anschluss 112 abgeführt.

Es handelt sich bei dem Zylinder 28 um einen doppelt wirkenden Zylinder, bei dem die Ölflussrichtung mittels einer hydraulischen Steuereinrichtung umkehrbar ist, so dass über den Anschluss 112 Hydrauliköl dem Zylinder 28 zugeführt werden kann, während das aus der Kammer 118 verdrängte Öl den Zylinder 28 über den Anschluss 110 verlässt.

Fig. 7 zeigt eine Variante des Zylinders 28 aus Fig. 6. Der Zylinder 28 gemäß Fig. 7 weist auch zwischen der Außenumfangsfläche des Kolbens 74 erster Stufe und der Innenumfangsfläche des Zylindergehäuses 72 eine hydraulische Dichtung 126 auf, so dass die Zylinderkammerbereiche 118 und 122 im Unterschied zu dem Zylinder nach Fig. 6 nunmehr gegeneinander abgedichtet sind. Dafür weist das Zylindergehäuse 72 jedoch einen weiteren hydraulischen Anschluss 128 auf, welcher an der Ringschulter 80 in den Zylinderkammerbereich 122 mündet. Der hydraulische Anschluss 128 ist mit dem hydraulischen Anschluss 112 über betreffende Leitungen 130 zusammengeschaltet, so dass beim Ausfahren der Kolbenstangen 76, 86 verdrängtes Hydrauliköl über die Leitungen 130 abfließen kann bzw. zum Einziehen der Kolbenstangen über die Leitungen 130 und die Anschlüsse 112, 128 Hydraulikfluid unter Druck in die Kammerbereiche 122, 124 eingeführt werden kann.

Bei dem Kolben nach Fig. 7 kann somit auch zu Beginn der Einzugsbewegung von einer größeren gemeinsamen wirksamen Kolbenbeaufschlagungsfläche Gebrauch gemacht werden, um über einen begrenzten Hubbereich anfänglich eine größere Kraft beim Zurückschwenken des Hebelarmabschnitts 10b auszunutzen. Ein solcher Teleskopzylinder eignet sich insbesondere auch als Schwenkantriebsmittel für einen Absetzkipper.

## Patentansprüche

1. Lastentransportfahrzeug mit einem Wechselbehälter (20) und einem Hubgerät (2) für den Wechselbehälter (20), wobei das Hubgerät (2) wenigstens einen Schwenkarm (10) zum Abladen des Wechselbehälters (20) von dem Lastentransportfahrzeug (3) bzw. zum Aufladen des Wechselbehälters (20) auf das Lastentransportfahrzeug (3) und wenigstens einen hydraulischen Zylinder (28) als Schwenkantriebsmittel für den Schwenkarm (10) beim Abladen und beim Aufladen eines Wechselbehälters aufweist,
**dadurch gekennzeichnet, dass** der hydraulische Zylinder (28) ein Teleskopzylinder ist, dessen Antriebskraft bei gegebener hydraulischer Druckbeaufschlagung der Teleskopzylinderstufen (72, 74, 76, 84) abhängig vom jeweiligen Ausfahrzustand der Teleskopzylinderstufen (72, 74, 76, 84) und somit von der jeweiligen Schwenkstellung des Schwenkarmes (10) variiert, wobei der Teleskopzylinder (28) einen Basiszylinderkörper (70), einen darin längs einer ersten Hubstrecke axial verschiebbar geführten und eine Hohlkolbenstange (76) aufweisenden Kolben (74) erster Stufe und einen in der Hohlkolbenstange (76) längs einer zweiten Hubstrecke axial verschiebbar geführten und eine Kolbenstange (86) aufweisenden Kolben (84) zweiter Stufe umfasst, wobei ausgehend von einer Stellung eingezogener Kolbenstangen (76, 86) die beiden Kolben (74, 84) unter Bildung einer gemeinsamen wirksamen Kolbenbeaufschlagungsfläche simultan mit Druck eines dem Zylinder (28) zuzuführenden Druckfluids beaufschlagbar sind, bis der Kolben (74) erster Stufe in eine Anschlagstellung am Ende der ersten Hubstrecke angekommen ist, wonach der Kolben (84) zweiter Stufe an seiner im Vergleich mit der gemeinsamen wirksamen Kolbenbeaufschlagungsfläche kleineren eigenen Kolbenbeaufschlagungsfläche weiterhin mit dem Druck des Druckfluids beaufschlagbar ist, um ihn längs der zweiten Hubstrecke zu bewegen und seine Kolbenstange (86) auszufahren und wobei die erste Hubstrecke kürzer ist als die zweite Hubstrecke.

2. Lastentransportfahrzeug nach Anspruch 1, **dadurch gekennzeichnet, dass** der Teleskopzylinder (28) ein doppelt wirkender Zylinder ist.

3. Lastentransportfahrzeug nach Anspruch 1 oder 2, **dadurch gekennzeichnet, dass** die gemeinsame wirksame Kolbenbeaufschlagungsfläche der beiden Kolben größer ist als das 1,2-Fache der Kolbenbeaufschlagungsfläche des Kolbens zweiter Stufe.

4. Lastentransportfahrzeug nach einem der vorhergehenden Ansprüche, **dadurch gekennzeichnet, dass** als Schwenkantriebsmittel für den Schwenkarm (10) wenigstens zwei hydraulische Teleskopzylinder (28) vorgesehen sind, die zum Gleichlauf mechanisch oder hydraulisch zwangsgekoppelt sind.

## Claims

1. Load transporting vehicle with an interchangeable container (20) and a lifting device (2) for the interchangeable container (20), wherein the lifting device (2) comprises at least one pivot arm (10) for unloading the interchangeable container (20) from the load transporting vehicle (3) and for loading the interchangeable container (20) onto the load transporting vehicle (3) and at least one hydraulic cylinder (28) as a pivot driving means for the pivot arm (10) during the unloading and loading of an interchangeable container, **characterised in that** the hydraulic cylinder (28) is a telescopic cylinder, the driving force of which with a given hydraulic pressure loading of the telescopic cylinder stages (72, 74, 76, 84) varies as a function of the respective extension position of the telescopic cylinder stages (72, 74, 76, 84) and thus of the respective pivot position of the pivot arm (10), wherein the telescopic cylinder (28) comprises a base cylinder body (70), a first stage piston (74) guided axially displaceably therein along a first lifting distance and comprising a hollow piston rod (76) and a second stage piston (84) guided axially displaceably in the hollow piston rod (76) along a second lifting distance and comprising a piston rod (86), wherein from a position of drawn-in piston rods (76, 86) the two pistons (74, 84) can be loaded with the formation of a jointly acting piston loading surface simultaneously by the pressure of a pressure fluid supplying the cylinder (28), until the first stage piston (74) has reached a stop position at the end of the first lifting distance, after which the second stage position (84) can be loaded further on its own piston loading surface that is smaller than the jointly acting piston loading surface by the pressure of the pressure fluid, in order to move it along the second lifting distance and to extend its piston rod (86) and wherein the first lifting distance is shorter than the second lifting distance.

2. Load transporting vehicle according to claim 1, **characterised in that** the telescopic cylinder (28) is a double acting cylinder.

3. Load transporting vehicle according to claim 1 or 2, **characterised in that** the jointly acting piston loading surface of the two pistons is greater than 1-2 times the piston loading surface of the second stage piston.

4. Load transporting vehicle according to any one of the preceding claims, **characterised in that** as the pivot driving means for the pivot arm (10) at least two hydraulic telescopic cylinders (28) are provided, which are force coupled mechanically or hydraulically for synchronisation.

## Revendications

1. Véhicule de transport de charge avec une caisse mobile (20) et un appareil de levage (2) pour la caisse mobile (20), l'appareil de levage (2) présentant au moins un bras de pivotement (10) pour le déchargement ou le chargement de la caisse mobile (20) sur le véhicule de transport de charge (3), et au moins un vérin hydraulique (28) comme moyen d'entraînement pivotant pour le bras de pivotement (10) lors du déchargement et du chargement d'une caisse mobile,
**caractérisé en ce que** le vérin hydraulique (28) est un vérin télescopique, dont la force d'entraînement varie en cas de mise sous pression hydraulique donnée des sections de vérin télescopique (72, 74, 76, 84) en fonction de leur état de sortie respectif et ainsi de la position de pivotement respective du bras de pivotement (10), le vérin télescopique (28) comportant un corps de cylindre de base (70), un piston (74) guidé en coulissement dans le sens axial dedans le long d'un premier parcours de levage et présentant une tige de piston creuse (76) de première section et un piston (84) présentant une tige de piston (86) et guidé en coulissement dans le sens axial dans la tige de piston creuse (76) le long d'un second parcours de levage de seconde section, en partant d'une position de tiges de piston rentrées (76, 86), les deux pistons (74, 84) pouvant être sollicités en formant une surface de sollicitation de piston active et commune simultanément par la pression d'un fluide sous pression à amener au cylindre (28), jusqu'à ce que le piston (74) de la première section soit arrivé dans une position de butée à la fin du premier parcours de levage, après quoi le piston (84) de seconde section peut en outre être sollicité sur sa propre surface d'alimentation de piston inférieure à la surface d'alimentation de piston active commune par la pression du fluide sous pression afin de le déplacer le long du second parcours de levage et de sortir sa tige de piston (86), et le premier parcours de levage étant plus court que le second parcours de levage.

2. Véhicule de transport de charge selon la revendication 1, **caractérisé en ce que** le vérin télescopique (28) est un vérin à double action.

3. Véhicule de transport de charge selon la revendication 1 ou 2, **caractérisé en ce que** la surface de sollicitation de piston active commune des deux pistons est supérieure à 1,2 fois la surface de sollicitation du piston de seconde section.

4. Véhicule de transport de charge selon l'une quelconque des revendications précédentes, **caractérisé en ce qu'**au moins deux vérins télescopiques hydrauliques (28) sont prévus comme moyen d'entraînement pivotant pour le bras de pivotement (10), lesquels sont couplés à force par voie mécanique ou hydraulique en vue d'une de synchronisation.
